# EUROPÄISCHE PATENTSCHRIFT

(11) **EP 2 518 347 B1**
(45) Veröffentlichungstag und Bekanntmachung des Hinweises auf die Patenterteilung: **30.12.2015**
(21) Anmeldenummer: 12165007.1
(22) Anmeldetag: 20.04.2012
(51) Int. Cl.: F16C 29/06, F16C 33/38

(54) **Käfig zur Aufnahme von Wälzkörpern, Linearwälzlager und Verfahren zum Bereitstellen eines Käfigs**
Cage for holding roller bodies, linear roller bearing and method for producing a cage
Cage destinée à la réception d'éléments roulants, palier à roulement linéaire et procédé de préparation d'une cage

(30) Priorität: 29.04.2011 DE 102011017753
(43) Veröffentlichungstag der Anmeldung: 31.10.2012
(73) Patentinhaber: Aktiebolaget SKF, 415 50 Göteborg (SE)
(72) Erfinder: Edelmann, Ludwig, 97717 Sulzthal (DE); Hofmann, Joachim, 97456 Dittelbrunn (DE); Jeschka, Erwin, 97711 Maßbach (DE); Kemmer, Martin, 97440 Werneck (DE); Velde, Henryk, 97440 Werneck (DE)
(74) Vertreter: Schonecke, Mitja

(56) Entgegenhaltungen:
- EP-A2- 1 710 457
- WO-A1-01/92737
- DE-C1- 3 609 779
- FR-A1- 2 644 835
- US-A- 4 541 739

## Beschreibung

Ausführungsbeispiele beziehen sich auf einem Käfig zur Aufnahme von Wälzkörpern, ein Linearwälzlager und ein Verfahren zum Bereitstellen eines Käfigs zur Aufnahme von Wälzkörpern.

Linearführungen werden in einer Vielzahl von technischen Gebieten eingesetzt. Sie ermöglichen eine im Wesentlichen reibungsfreie translatorische Bewegung entlang einer linearen Bewegungsrichtung. Hierbei sind Bewegungen, die mithilfe einer Linearführung geführt werden können, nicht auf lineare Bewegungen im mathematischen Sinn, also insbesondere auf Geraden beschränkt. Insofern werden im Bereich der Linearführung die Begriffe "linear" und "translatorisch" häufig synonym gebraucht.

Je nach Art der verwendeten Führungstechnik werden im Bereich der Linearführung Wälzlagerführungen und Gleitlagerführungen unterschieden. Bei Wälzlagerführungen werden die zuvor erwähnten translatorischen Bewegungen eines Bauteils bezüglich eines Gegenbauteils durch ein Abrollen oder Abwälzen von Wälzlagern zwischen entsprechenden Laufbahnen des Bauteils und des entsprechenden Gegenbauteils vermittelt. Als Wälzkörper kommen hier beispielsweise kugelförmige Wälzkörper (Kugeln), zylinderförmige Wälzkörper, nadelförmige Wälzkörper und tonnenförmige Wälzkörper zum Einsatz.

Die Wälzkörper bewegen sich hierbei im Allgemeinen mit einer Geschwindigkeit zwischen dem Bauteil und dem entsprechenden Gegenbauteil, die der Hälfte der Relativgeschwindigkeit zwischen diesen beiden Bauteilen entspricht. Handelt es sich beispielsweise bei dem Bauteil um einen Profilschienenwagen und bei dem entsprechenden Gegenbauteil um die zugehörige Profilschiene, so bewegen sich die Wälzkörper typischerweise mit der Hälfte der Relativgeschwindigkeit des Profilschienenwagens zu der Profilschiene. Hierbei kommt es nicht darauf an, ob der Profilschienenwagen und/oder die Profilschiene oder-allgemein gesprochen - das Bauteil und/oder das Gegenbauteil sich bezogen auf eine größere Baugruppe, ein System oder eine Maschine bewegen.

Aufgrund der Tatsache, dass die Wälzkörper sich mit einer geringeren Geschwindigkeit als der Relativgeschwindigkeit der beiden Bauteile zueinander bewegen, gibt es einen prinzipiellen Bauunterschied entsprechender linearer Wälzlager, die auch als Linearwälzlagern bezeichnet werden. Bei Linearwälzlagern, bei denen die Wälzkörper nicht oder nicht vollständig zurückgeführt werden, ist aufgrund der unterschiedlichen Geschwindigkeit der Wälzkörper zu der Relativgeschwindigkeit eine Amplitude oder ein Hub, den das Linearwälzlager führen kann, durch die beschränkte Anzahl der Wälzkörper beschränkt. Diese Linearwälzlager werden daher auch als "endliche Führungen" bezeichnet.

Im Unterschied hierzu ist bei Linearwälzführungen, bei denen die Wälzkörper zurückgeführt werden, der Hub bzw. die Amplitude im Prinzip nicht beschränkt, sondern wird lediglich durch konstruktive Rahmenbedingungen, also beispielsweise durch die Länge der Profilschiene, begrenzt.

Bei solchen "unendlichen" Linearwälzlagern werden entsprechend ein Lastbereich, wenigstens ein Umlenkbereich und ein Rücklaufbereich bzw. Rückführungsbereich unterschieden, wobei der wenigstens eine Umlenkbereich zwischen dem Rücklaufbereich und dem Lastbereich angeordnet ist. In dem Lastbereich erfolgt die eigentliche Führung durch die Wälzkörper, sodass der Lastbereich typischerweise eine Laufbahn des Bauteils und wenigstens einen Teil einer Gegenlaufbahn des Gegenbauteils umfasst. In dem wenigstens einen Umlenkbereich werden die Wälzkörper aus dem Lastbereich in den Rücklaufbereich überführt, wobei der Rücklaufbereich entsprechend den Rücktransport der Wälzkörper übernimmt, sodass die Wälzkörper erneut in dem Lastbereich eingebracht werden können. In dem Rücklaufbereich bewegen sich so die Wälzkörper im Allgemeinen entgegen der Richtung im Lastbereich.

Sowohl bei endlichen als auch bei unendlichen Linearwälzlagern werden häufig Käfige zur Aufnahme der Wälzkörper verwendet, da diese aus unterschiedlichsten Gründen einen Betrieb des betreffenden Linearwälzlagers, eine Herstellung des Linearwälzlagers oder auch eine Montage desselben vereinfachen oder anderweitig positiv beeinflussen können. So können Käfige gegebenenfalls eine Geräuschentwicklung oder auch einen Verschleiß während des Betriebs positiv beeinflussen oder auch aufgrund einer eventuell implementierten Haltefunktionalität eine Montage des betreffenden Linearwälzlagers vereinfachen.

Die DE 100 26 652 A1 bezieht sich auf einen Käfig für Wälzkörper mit zu den Wälzkörpern hin offenen Hohlräumen, die als mitlaufendes Schmiermitteldepot dienen. Der Käfig kann hier als biegeelastischer Kugelschlauch ausgebildet sein. Die US 4,541,739 bezieht sich auf einen kapillaren Kugellagerkäfig, während sich die EP 1 710 457 A1 auf eine Linearführung mit Wälzkörpern in einer Käfigkette mit Schmierstofftaschen bezeiht.

Wälzkörperkäfige können daher aus vielen Gründen mit höchst unterschiedlichen Zielsetzungen implementiert werden. Unabhängig hiervon sollen sie möglichst einfach und kostengünstig herstellbar sein.

Es besteht so ein Bedarf, einen Käfig zur Aufnahme von Wälzkörpern für ein Linearwälzlager zu schaffen, der eine einfache Herstellung ermöglicht.

Diesem Bedarf trägt ein Käfig zur Aufnahme von Wälzkörpern für ein Linearwälzlager gemäß Anspruch 1, ein Linearwälzlager gemäß Anspruch 11 oder auch ein Verfahren zum Bereitstellen eines Käfigs gemäß Anspruch 14 Rechnung.

Ein Ausführungsbeispiel eines Käfigs zur Aufnahme von Wälzkörpern für ein Linearwälzlager umfasst einen flexiblen, schlauchförmigen Hohlkörper zur Aufnahme der Wälzkörper in seinem Inneren, wobei sich der Hohlkörper entlang einer zentral in dem Inneren verlaufenden Erstreckungslinie erstreckt. Der Hohlkörper weist eine Mehrzahl paarweise senkrecht zu der Erstreckungslinie angeordnete Öffnungen in einer Oberfläche des Hohlkörpers auf, wobei die Öffnungen derart ausgeformt sind, dass die Wälzkörper die Öffnungen wenigstens teilweise durchdringen können.

Ein Ausführungsbeispiel eines Linearwälzlagers umfasst einen Lastbereich, einen Rücklaufbereich und einen zwischen dem Rücklaufbereich und dem Lastbereich angeordneten Umlenkbereich, wobei der Lastbereich eine Laufbahn umfasst. Es umfasst ferner einen zuvor genannten Käfig sowie eine Mehrzahl von Wälzkörpern, die in dem Inneren des Käfigs angeordnet sind, wobei der Käfig mit der Mehrzahl von Wälzkörpern in dem Lastbereich, dem Rücklaufbereich und dem Umlenkbereich angeordnet ist. Die Wälzkörper sind mit der Laufbahn und wenigstens einem Abschnitt einer Gegenlaufbahn eines Gegenbauteils in Berührung bringbar, um eine lineare Bewegung des Linearwälzlagers zu dem Gegenbauteil zu ermöglichen.

Ein Ausführungsbeispiel eines Verfahrens zum Bereitstellen eines Käfigs zur Aufnahme von Wälzkörpern für ein Linearwälzlager umfasst ein Bereitstellen eines flexiblen, schlauchförmigen Hohlkörper zur Aufnahme der Wälzkörper in seinem Inneren, wobei sich der Hohlkörper entlang einer zentral in dem Inneren verlaufenden Erstreckungslinie erstreckt, und ein Erzeugen eine Mehrzahl paarweise senkrecht zu der Erstreckungslinie angeordnete Öffnungen in einer Oberfläche des Hohlkörpers, wobei die Öffnungen derart ausgeformt sind, dass die Wälzkörper die Öffnungen wenigstens teilweise durchdringen können.

Einem Käfig zur Aufnahme von Wälzkörpern für Linearwälzlager gemäß einem Ausführungsbeispiel liegt die Erkenntnis zugrunde, dass beispielsweise die Herstellung des Käfigs dadurch vereinfacht werden kann, indem ein flexibler, schlauchförmiger Hohlkörper mit einer entsprechenden Anzahl paarweise senkrecht zu der Erstreckungslinie angeordnete Öffnungen in der Oberfläche verwendet wird. Ein solcher flexibler und schlauchförmiger Hohlkörper ist häufig einfach und damit kostengünstig herstellbar. Ausführungsbeispiele umfassen so häufig wenigstens 4, wenigstens 6, wenigstens 8 oder wenigstens 10 Öffnungen, wobei die Mehrzahl der Öffnungen auch eine größere Anzahl von Wälzkörpern umfassen kann.

Bei Ausführungsbeispielen sind die Öffnungen derart ausgeformt, dass die Wälzkörper die Öffnungen wenigstens teilweise durchdringen können. Dies schließt die Möglichkeiten mit ein, wenigstens einige oder alle Öffnungen vorzusehen, die so ausgeformt sind, dass die Wälzkörper die Öffnungen lediglich teilweise oder auch vollständig durchdringen können. Können die Wälzkörper die Öffnungen "nur" teilweise durchdringen, kann der Käfig gegebenenfalls eine Führung oder ein Halten der Wälzkörper in einer Richtung senkrecht zur Erstreckungsrichtung bewirken. Andererseits kann ein Käfig, bei dem die Wälzkörper wenigstens einige dieser Öffnungen vollständig durchdringen können, gegebenenfalls ein leichteres Bestücken des Käfigs mit den Wälzkörpern ermöglichen.

Bei Ausführungsbeispielen eines Käfigs ist die Mehrzahl von Öffnungen entlang der Erstreckungslinie derart angeordnet, dass die Wälzkörper in dem Inneren des Hohlkörpers voneinander beabstandet angeordnet sind. Anders ausgedrückt ist die Mehrzahl von Öffnungen entlang der Erstreckungslinie derart, dass die Wälzkörper in dem Inneren des Hohlkörpers auf Abstand gehalten werden. Noch anders ausgedrückt sind sie so angeordnet, dass sie daran gehindert werden sich zu berühren. Hierdurch ist es möglich, einen Verschleiß der Wälzkörper zu reduzieren oder auch eine Geräuschentwicklung während des Betriebs des Linearwälzlagers zu reduzieren. Bei Ausführungsbeispielen kann so ein Abstand zweier benachbarter Öffnungen zwischen Mittel- oder Mittenpunkten der benachbarten Öffnungen der Hälfte einer Umfangslänge des Hohlkörpers in einer Ebene senkrecht zur Erstreckungslinie entsprechen. Bei Ausführungsbeispielen kann ein Verhältnis dieses Abstandes zu der Umfangslänge in einem Bereich zwischen einem unteren Bereichswert und einem oberen Bereichswert liegen, wobei der untere Bereichswert häufig 0.35, 0.4 oder 0.45 beträgt, und der obere Bereichswert 1, 1.25, 1.5 oder 2 beträgt.

Bei Ausführungsbeispielen sind die Öffnungen häufig derart ausgeformt, dass die Wälzkörper die Öffnungen nur teilweise durchdringen können. Hierdurch kann gegebenenfalls eine Montage des Linearwälzlagers und ein Eindringen des Käfigs in das Linearwälzlager vereinfacht werden, da ein Verlassen der Wälzkörper durch die Öffnungen unterbunden wird.

Zu diesem Zweck können bei Ausführungsbeispielen die Mehrzahl von Öffnungen elliptisch mit einer kleinen und einer großen Halbachse oder kreisförmig mit einem Radius ausgebildet sein, wobei der Radius der kreisförmigen Öffnungen oder die kleine Halbachse der elliptischen Öffnungen kleiner als ein Radius der Wälzkörper senkrecht zu einer Rotationssymmetrieachse der Wälzkörper ist. Im Falle kugelförmiger Wälzkörper handelt es sich somit um den Radius der kugelförmigen Wälzkörper, also der Kugeln.

Bei Ausführungsbeispielen ist der Hohlkörper häufig dünnwandig mit einer Wandstärke zwischen einer unteren Wandstärke und einer oberen Wandstärke ausgeführt, wobei die untere Wandstärke häufig 10 µm, 50 µm, 100 µm, 200 µm, 300 µm, 400 µm, 500 µm oder 1 mm beträgt. Die obere Wandstärkedicke beträgt häufig 5 mm, 4 mm, 3 mm, 2 mm, 1 mm, 500 µm, 400 µm oder 300 µm Hierbei sind die obere Wandstärkendicke und die untere Wandstärkendicke beliebig kombinierbar, sofern die untere Wandstärkendicke kleiner ist als die obere Wandstärkendicke. Dies kann der Umsetzung der zuvor beschriebenen Flexibilität dienen.

Bei Ausführungsbeispielen weist der Hohlkörper so häufig einen biegsamen Kunststoff, Naturkautschuk, einen synthetischen Kautschuk, Polyvinylchlorid (PVC), Polyurethan (PU bzw. PUR), Polyamid (PA), Polyethylen (PE) oder Silikon auf oder ist aus einem oder mehrerer dieser Materialien gefertigt. Dies kann der Umsetzung der zuvor beschriebenen Flexibilität dienen.

So ist bei Ausführungsbeispielen der Käfig häufig ausgebildet, um mehrfach mit einem Biegeradius biegbar zu sein, wobei ein Verhältnis des Biegeradius zu einer Umfangslänge des Käfigs in einer Ebene senkrecht zu der Erstreckungslinie einen Wert 10 aufweist. Bei Ausführungsbeispielen kann so auch ein kleinerer Wert, beispielsweise 5, 4, 3, 2.5,2, 1.5, 1, 0.5, 0.25,0.2, 0.15 oder 0.1 realisierbar sein. Häufig ist ein entsprechender Käfig so wenigstens 10-mal, wenigstens 100-mal, wenigstens 1000-mal und, wenigstens 10.000-mal oder wenigstens 100.000-mal entsprechend gebogen zu werden. Ausführungsbeispiele eines Käfigs können so gegebenenfalls auch in kleinen Linearwälzlagern eingesetzt werden, in denen für den Umlenkbereich nur wenig Platz zur Verfügung steht, sodass dieser entsprechend eng ausgebildet ist. Ausführungsbeispiele können so gegebenenfalls ferner einen Betrieb über eine längere Betriebsdauer ermöglichen.

Ausführungsbeispiele eines Käfigs können ferner in seinem Inneren ein poröses Material aufweisen, welches zur Aufnahme eines Schmiermittels ausgebildet ist. Hierdurch ist es möglich, gegebenenfalls eine Schmiermittelversorgung für die Wälzkörper bzw. des Linearwälzlagers bereits zusammen mit dem Käfig zu implementieren und so gegebenenfalls das Linearwälzlager konstruktiv zu vereinfachen.

Bei manchen Ausführungsbeispielen ist der Hohlkörper an eine Form wenigstens eines Lastbereich, eines Umlenkbereichs oder eines Rücklaufbereich des Linearwälzlagers bzw. der entsprechenden Kanäle (Lastkanal, Umlenkkanal, Rücklaufkanal) anpassbar. Je nach konkreter Ausgestaltung des Hohlkörpers kann so die Flexibilität des Hohlkörpers im Zusammenspiel mit einem entsprechend ausgeformten Lastbereich, Umlenkbereich oder Rücklaufbereich des Linearwälzlagers eine Sicherheit des Käfigs unterstützen und einer gegebenenfalls auftretende Verschiebung der Wälzkörper zu den Öffnungen unterbinden. So kann bei einem Käfig gemäß einem Ausführungsbeispiel der Hohlkörper beispielsweise eine ovale oder eine von einer Kreisform abweichende Querschnittsform senkrecht zu der Erstreckungslinie aufweisen.

Bei einem Linearwälzlager gemäß einem Ausführungsbeispiel kann der Käfig ferner ein Schmiermittel zur Schmierung des Linearwälzlagers umfassen. Je nach Art des verwendeten Schmiermittels ist hierbei eine Implementierung eines porösen Materials gegebenenfalls nicht notwendig. So kann beispielsweise im Falle eines Schmiermittels mit einer den Betriebsbedingungen des Linearwälzlagers entsprechend angepassten Viskosität auch direkt in das Innere des Hohlkörpers eingefüllt werden. Im Falle eines Schmiermittels mit einer geringen Viskosität, beispielsweise einem Öl, kann es ratsam sein, in dem Inneren des Käfigs ein entsprechendes poröses Material vorzusehen.

Wie bereits zuvor erläutert, kann bei dem Linearwälzlager der Rücklaufbereich oder auch der Umlenkbereich eine von einer Kreisform abweichende Querschnittsform aufweisen, wobei die Querschnittsform senkrecht zu der Erstreckungslinie des Käfigs liegt. Hierdurch kann gegebenenfalls eine Betriebssicherheit des Linearwälzlagers verbessert werden, da eine Verschiebung der Wälzkörper zu den Öffnungen in dem Hohlkörper gegebenenfalls unterbunden werden kann.

Ein Verfahren zum Bereitstellen eines Käfigs stellt aufgrund der Möglichkeit, einen flexiblen, schlauchförmigen Hohlkörper einfach herzustellen bzw. entsprechend kostengünstig zu beziehen, häufig eine einfache und damit kostengünstige Möglichkeit einen entsprechenden Käfig bereitzustellen.

Bei Ausführungsbeispielen kann vor dem Erzeugen der Mehrzahl paarweise senkrecht zu der Erstreckungslinie angeordneter Öffnungen der Hohlraum auch mit einem porösen Material wenigstens teilweise gefüllt werden, wobei bei dem Erzeugen der Mehrzahl der Öffnungen auch das poröse Material, welches jeweils zwischen den paarweisen Öffnungen angeordnet ist, entfernt wird. Dies kann beispielsweise durch ein Stanzen oder auch ein Bohren geschehen. Hierdurch ist es möglich, ein Material zur Aufnahme einfach in das Innere des Hohlkörpers einzubringen, wobei bei dem Erzeugen der paarweisen Öffnungen überschüssiges Material des porösen Materials mit entfernt wird.

Bei Ausführungsbeispielen kann vor oder auch nach dem Erzeugen der Mehrzahl paarweiser Öffnungen das poröse Material gegebenenfalls mit dem Schmiermittel getränkt oder versorgt werden.

Nachfolgend werden unter Bezugnahme auf die beigefügten Figuren Ausführungsbeispiele der vorliegenden Erfindung näher beschrieben und erläutert.
Fig. 1 zeigt eine perspektivische Darstellung eines schlauchförmigen Käfigs gemäß einem Ausführungsbeispiel;
Fig. 2 zeigt schematisch einen Querschnitt durch ein Linearwälzlager gemäß einem Ausführungsbeispiel;
Fig. 3 zeigt schematisch einen Querschnitt durch einen Rücklaufbereich, in dem ein Käfig mit kugelförmigen Wälzkörpern angeordnet ist;
Fig. 4 zeigt einen Querschnitt durch einen weiteren Rücklaufbereich eines Linearwälzlagers gemäß einem Ausführungsbeispiel;
Fig. 5 zeigt schematisch einen Querschnitt durch einen Lastbereich eines Linearwälzlagers gemäß einem Ausführungsbeispiel;
Fig. 6 zeigt schematisch eine Seitenansicht eines Käfigs gemäß einem Ausführungsbeispiel mit einer Form unterstützen Struktur; und
Fig. 7 zeigt eine Seitenansicht eines Käfigs gemäß einem Ausführungsbeispiel mit zylinderförmigen Wälzkörpern.

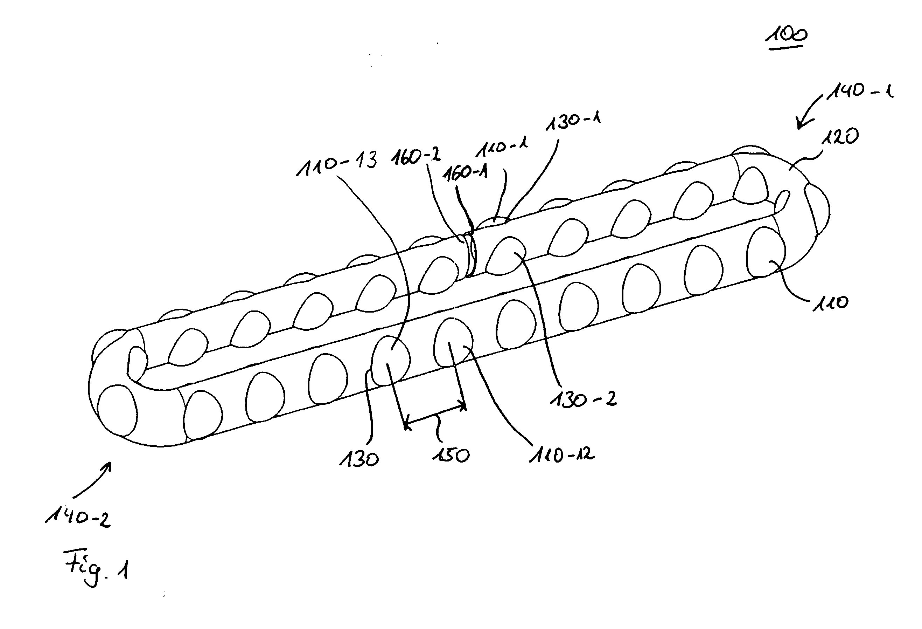

Bevor im Zusammenhang mit den Figuren 1 bis 7 Ausführungsbeispiele näher beschrieben und hinsichtlich ihrer Funktionsweise näher erläutert werden, bietet es sich an darauf hinzuweisen, dass im Rahmen der vorliegenden Beschreibung zusammenfassende Bezugszeichen für Objekte, Strukturen und andere Entitäten verwendet werden, wenn auf die betreffende Entität an sich, mehrerer entsprechende Entitäten innerhalb eines Ausführungsbeispiels oder innerhalb mehrerer Ausführungsbeispiele oder die betreffende Gattung von Entitäten näher eingegangen wird. Hierdurch ist es möglich, die Beschreibung knapper und kürzer zu halten, da unnötige Wiederholungen vermieden werden können, da Beschreibungen die sich auf eine Entität beziehen, auch auf andere Entitäten in anderen Ausführungsbeispielen übertragbar sind, soweit dies nicht explizit anders angegeben ist oder sich aus dem Zusammenhang ergibt. Im Unterschied hierzu werden, wenn einzelne Entitäten bezeichnet werden, individuelle Bezugszeichen verwendet, die auf den entsprechenden zusammenfassenden Bezugszeichen basieren. Entitäten, die mehrfach in einem Ausführungsbeispiel oder in unterschiedlichen Ausführungsbeispielen auftreten, können hierbei bezüglich einiger ihrer technischen Parameter identisch und/oder unterschiedlich ausgeführt werden. Es ist so beispielsweise möglich, dass mehrere Entitäten innerhalb eines Ausführungsbeispiels bezüglich eines Parameters identisch, bezüglich eines anderen Parameters jedoch unterschiedlich ausgeführt sein können.

Fig. 1 zeigt eine perspektivische Darstellung eines Käfigs 100 zur Aufnahme von Wälzkörpern 110 für ein Linearwälzlager. Der Käfig 100 weist einen flexiblen, schlauchförmigen Hohlkörper 120 zur Aufnahme der Wälzkörper 110 in seinem Inneren auf, wobei sich der Hohlkörper 120 entlang einer in seinem Inneren verlaufenden Erstreckungslinie erstreckt, die aufgrund der in Fig. 1 gewählten Perspektive nicht dargestellt ist. Der Hohlkörper 120 weist eine Mehrzahl paarweise senkrecht zu der Erstreckungslinie angeordnete Öffnungen 130 in der Oberfläche des Hohlkörpers 120 auf. Beispielhaft ist dies im Zusammenhang mit dem Wälzkörper 110-1 gezeigt. Die Erstreckungslinie verläuft zentral, also in einer Mitte des Hohlkörpers 120 entlang seiner Erstreckung. Hierbei folgt die Erstreckungslinie der jeweiligen Orientierung des Hohlkörpers 120, folgt also insbesondere auch etwaigen Krümmungen, wie diese in den beiden in Fig. 1 dargestellt gekrümmten Bereichen 140-1 und 140-2 dargestellt sind. Der Verlauf des Käfigs in den beiden gekrümmten Bereichen 140 kann dem entsprechen, wie er unter tatsächlichen Bedingungen in einem Umlenkbereich auftreten kann.

Senkrecht zu dieser Erstreckungslinie weist der Hohlkörper 120 nun jeweils eine Öffnung 130-1 und 130-2 auf, die einander gegenüberliegen. Entsprechend diesen beiden Öffnungen 130-1,130-2 weist der in Fig. 1 gezeigte Käfig 100 weitere Paare von Öffnungen 130 auf, also insgesamt 23 Paare von Öffnungen 130. Selbstverständlich kann die Anzahl von Paaren von Öffnungen bzw. die Anzahl von Öffnungen bei verschiedenen Ausführungsbeispielen unterschiedlich sein. So können bei Ausführungsbeispielen eines Käfigs 100 mehr oder auch weniger Paare von Öffnungen vorgesehen sein.

Die Wälzkörper 110, wie sie bei dem in Fig. 1 gezeigten Käfig eingesetzt sind, sind kugelförmiger Wälzkörper, also Kugeln. Die Öffnungen 130 sind hierbei derart ausgeformt, dass die Wälzkörper 110 die Öffnungen 130 wenigstens teilweise durchdringen können, umso mit den Laufbahnen des Linearwälzlagers im Lastbereich in Berührung zu stehen.

Um bei dem in Fig. 1 gezeigten Ausführungsbeispiel ein Herausfallen der Wälzkörper 110 aus dem Käfig 100 zu unterbinden, sind die Öffnungen 110 in diesem Fall derart ausgeformt, dass die Wälzkörper die Öffnungen 130 nur teilweise durchdringen können. Hierbei kann bei Ausführungsbeispielen, bei denen die Wälzkörper 110 kugelförmige sind, die Mehrzahl von Öffnungen beispielsweise elliptisch mit einer kleinen und einer großen Halbachse oder auch kreisförmig mit einem Radius ausgebildet sein, wobei ein Radius der kugelförmigen Wälzkörper 110 größer als der Radius der kreisförmigen Öffnungen 130 oder größer als die kleinen Halbachsen der elliptischen Öffnungen 130 ist. Anders ausgedrückt sind der Radius der kreisförmigen Öffnungen 130 oder auch die kleinen Halbachsen der elliptischen Öffnungen 130 entsprechend kleiner als der Radius des betreffenden kugelförmigen Wälzkörpers.

Die Mehrzahl von Öffnungen 130 entlang der Erstreckungslinie ist derart angeordnet, dass die Wälzkörper 110 voneinander beabstandet sind. Anders ausgedrückt weisen die Wälzkörper 110 bzw. die zugehörigen Öffnungen 130 entlang der in Fig. 1 nicht gezeigten Erstreckungslinie einen Abstand 150 auf, der größer ist als ein Durchmesser der betreffenden Wälzkörper 110 in Richtung der Erstreckungslinie. Dies ist beispielhaft an den beiden Wälzkörpern 110-12 und 110-13 gezeigt. Der Abstand 150 ist größer als ein Durchmesser der kugelförmigen Wälzkörper 110.

Im Falle abweichender Wälzkörperformen, also beispielsweise im Fall nadelförmiger, oder tonnenförmiger Wälzkörper ist der Abstand 150 entsprechend größer als ein Durchmesser bzw. im Falle tonnenförmiger Wälzkörper als ein größter Durchmesser der betreffenden Wälzkörper in einer Ebene senkrecht zu ihrer Rotationsachse. Aufgrund ihrer Eigenschaft als Wälzkörper weisen sie stets eine entsprechende Rotationssymmetrieachse mit einer entsprechenden Ebene und einem entsprechenden Durchmesser auf. Allerdings handelt es sich bei der soeben beschriebenen Beabstandung um eine optionale Ausführung, von der bei Käfigen 100 gemäß Ausführungsbeispielen auch abgewichen werden kann. Ist ein solcher Abstand 150 implementiert, kann der Käfig 100 die Wälzkörper 110 somit auf Distanz halten und damit gegebenenfalls ein Berühren während des Betriebs unterbinden. Dies kann beispielsweise dazu führen, dass der Verschleiß der Wälzkörper durch eine Berührung der Wälzkörper 110 untereinander verbessert wird oder aber auch eine Geräuschentwicklung während des Betriebs des Linearwälzlagers reduziert wird.

Der Käfig 100, wie er in Fig. 1 gezeigt ist, weist zwei Enden 160 auf, die nicht geschlossen sind. Anders ausgedrückt ist sowohl ein Ende 160-1 wie auch ein Ende 160-2 des Käfigs 100 offen. Bei anderen Ausführungsbeispielen eines Käfigs 100 können die Enden 160 ebenso durch geeignete Maßnahmen verschlossen sein. So können - eine entsprechende Materialwahl des Käfigs vorausgesetzt - die Enden 160 beispielsweise vollständig oder punktuell verschweißt sein. Auch ist es möglich, Käfige 100 gemäß Ausführungsbeispielen zu implementieren, bei denen Enden 160, wie die beiden Enden 160-1 und 160-2 miteinander derart verbunden sind, dass der Käfig 100 einen in sich geschlossenen Hohlkörper 120 bildet. Dies kann beispielsweise dadurch erzielt werden, dass die betreffenden Enden 160 miteinander verschweißt werden. Ebenso ist es möglich, die beiden Enden 160 miteinander zu verbinden und gleichzeitig zu verschließen, sodass gerade kein durchgängiger Hohlkörper entsteht. Dies kann beispielsweise dadurch erzielt werden, dass die beiden Enden 160 sowohl miteinander als auch bezüglich ihrer gegenüberliegenden Seiten, in denen die jeweiligen Öffnungen eines Paares von Öffnungen 130 eingebracht sind, verschweißt werden.

Der in Fig. 1 gezeigte Käfig 100 ist zur Aufnahme kugelförmiger Wälzkörper 110 ausgebildet, weshalb dieser auch - nach seiner Bestückung mit entsprechenden Wälzkörpern 110 - als Kugelkette für ein Linearlager oder ein Linearwälzlager bezeichnet wird. Hinsichtlich des Materials kann der Käfig 100, wie er in Fig. 1 gezeigt ist, aber auch andere Ausführungsbeispiele einen biegsamen Kunststoff, Naturkautschuk, einen synthetischen Kautschuk, Polyvinylchlorid (PVC), Polyurethan (PU bzw. PUR), Polyamid (PA), Polyethylen (PE) oder ein Silikon aufweisen. Bei manchen Ausführungsbeispielen können Käfige 100 auch vollständig aus einem entsprechenden Material bestehen. In einem solchen Fall kann ein entsprechender Käfig 100 bzw. eine entsprechende Kugelkette im Fall von kugelförmigen Wälzkörpern 110 einteilig bzw. einstückig aus Kunststoff oder einem oder mehreren Materialien gefertigt sein.

Der Hohlkörper 120 weist bei Käfigen 100 gemäß Ausführungsbeispielen typischerweise einer Wandstärke auf, die zwischen einem minimalen Wandstärkewert und einem maximalen Wandstärkewert liegt. Diese Werte liegen typischerweise in einem Bereich, sodass der Hohlkörper 120 als dünnwandig zu bezeichnen ist. Je nach konkreter Ausgestaltung bzw. Implementierung eines Käfigs 100 beträgt ein minimaler Wandstärkewert beispielsweise 10 µm, 20 µm, 50 µm, 100 µm, 200 µm, 300 µm, 400 µm, 500 µm oder 1 mm. Entsprechend beträgt ein oberer Wandstärkewert häufig 5 mm, 4 mm, 3 mm, 2 mm, 1 mm, 500 µm, 400 µm oder 300 µm. Diese können je nach Anforderung an den Käfig 100 typischerweise beliebig miteinander kombiniert werden, wobei der maximale Wandstärkewert natürlich oberhalb des minimalen Wandstärkewerts liegt.

Durch diese Materialwahl und/oder Wahl der Wandstärke des Hohlkörpers 120 kann so ein biegefähiger Käfig für ein Linearlager bzw. ein Linearwälzlager entwickelt werden. Ein Käfig 100 gemäß einem Ausführungsbeispiel kann daher - je nach konkreter Implementierung - mehrfach mit einem Biegeradius gebogen werden, wobei ein Verhältnis des Biegeradius zu einer Umfangslänge des Käfigs in einer Ebene senkrecht zu der Erstreckungslinie einen Wert von 10 aufweist. Bei vielen Ausführungsbeispielen sind auch geringere Biegeradien und damit eine höhere Koppelbarkeit möglich. So kann bei anderen Ausführungsbeispielen das zuvor genannte Verhältnis auch Werte von 5, 4, 3, 2.5, 2, 1.5, 1, 0.5, 0.25, 0.2, 0.15 oder 0.1 aufweisen.

Im Falle kugelförmiger Wälzkörper 110 ist der Umfang bzw. die Umfangslänge des Hohlkörpers 120 in einer Ebene senkrecht zu der Erstreckungslinie typischerweise wenigstens zweimal so groß wie der Durchmesser der betreffenden kugelförmigen Wälzkörper, wobei hier jeweils auf einen Umfang bzw. einer Umfangslänge des Hohlkörpers 120 an seinem Inneren abgestellt wird. Beträgt die Umfangslänge gerade das π-fache (π = 3.1415...) des Durchmessers, können die betreffenden Wälzkörper 110 im Falle eines kreisrunden Schlauchs gerade vollständig von einem Ende 160 ausgehend in das Innere des Hohlkörpers eingebracht werden.

Hierbei sind Käfige 100 gemäß Ausführungsbeispielen typischerweise ausgebildet, um mehrfach entsprechend gebogen werden zu können. Bei Ausführungsbeispielen kann so wenigstens eine entsprechende Bewegung 10-mal, bei anderen Ausführungsbeispielen mindestens 100-mal, mindestens 1000-mal, mindestens 10.000-mal oder mindestens 100.000-mal durchgeführt werden.

Ist ein entsprechendes Bestücken des Käfigs 100 von einem der Enden 160 aus aufgrund eines Verschlusses eines der Enden 160 oder aufgrund anderer, beispielsweise geometrischer Randbedingungen nicht möglich, besteht grundsätzlich die Möglichkeit, den Käfig 100 durch die Öffnungen 130 mit den entsprechenden Wälzkörpern zu bestücken. Sind die Öffnungen 130 derart ausgebildet, dass diese gerade nur ein teilweises Durchdringen der Wälzkörper ermöglichen, kann es gegebenenfalls ratsam sein, den Käfig 100 aus einem elastischen Material, wie diese zuvor beschrieben wurden, zu fertigen.

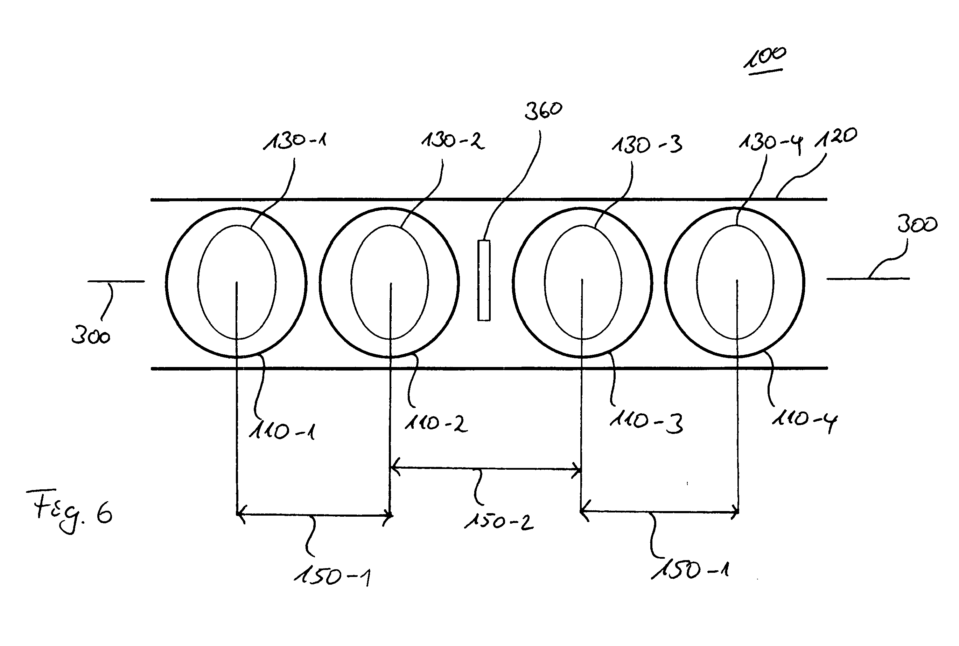

Zumindest im Falle kugelförmiger Wälzkörper 110 kann es ratsam sein, einen Hohlkörper 120 mit einem senkrecht zu der Erstreckungslinie ovalen Querschnitt zu implementieren. Dies kann beispielsweise durch eine vordefinierte Form unter Zuhilfenahme eines entsprechenden Materials (z.B. Polyvinylchlorid (PVC)) geschehen. Anders ausgedrückt kann ein biegsamer, aber trotzdem formstabiler Hohlkörper verwendet werden. Ebenso können optional entlang der Erstreckungslinie eine oder mehrere formunterstützende Strukturen eingebracht werden, wie diese noch näher im Zusammenhang mit Fig. 6 beschrieben wird. Ebenso kann jedoch auch der Käfig 100 derart ausgebildet sein, dass dieser aufgrund der geometrischen Verhältnisse im Inneren des Linearwälzlagers, also beispielsweise im Inneren des Rücklaufbereichs, des Umlenkbereichs oder des Lastbereichs, eine entsprechende ovale bzw. von einer Kreisform abweichende Querschnittsform ausbildet. Auch der in Fig. 1 gezeigte Käfig 100 weist eine entsprechende ovale Querschnittsform auf, wie beispielsweise das Ende 160-1 bei der in Fig. 1 gewährten Darstellung zeigt.

Somit zeigt Fig. 1 das Design eines Käfigs 100 bzw. eines Käfigschlauchs mit einem dünnwandig, ovalen Schlauch, in dem Löcher bzw. Öffnungen 130 eingebracht sind, in denen die als Wälzkörper 110 dienenden Laufkugeln gehalten werden.

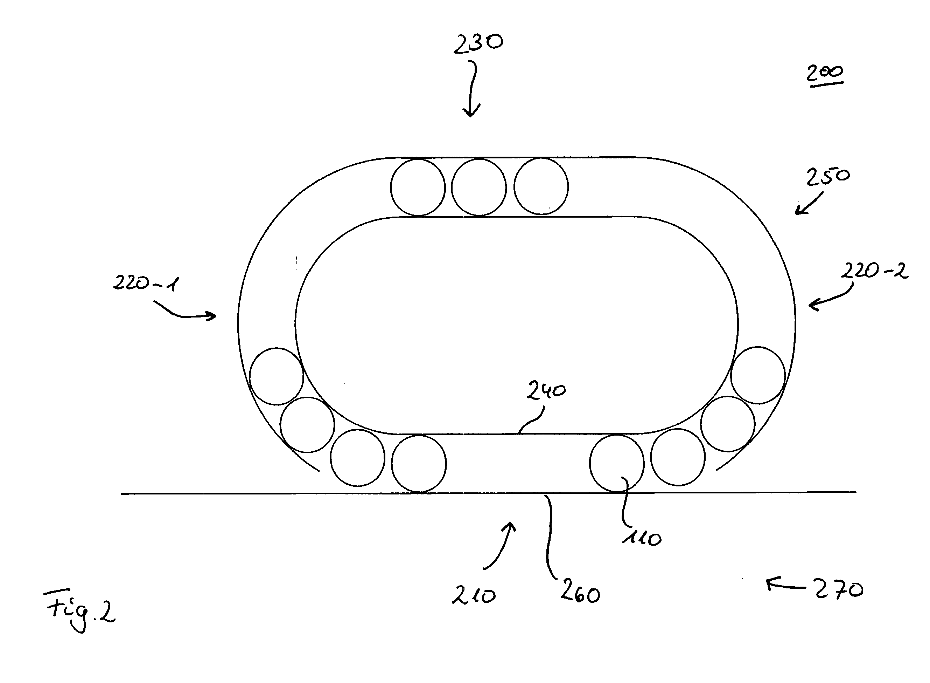

Fig. 2 zeigt eine vereinfachte Querschnittsdarstellung durch ein Linearwälzlager 200, wobei aus Gründen der Übersichtlichkeit der Käfig 100 gemäß einem Ausführungsbeispiel nicht mit dargestellt ist. Das Linearwälzlager 200, bei dem es sich beispielsweise um eine Profilschienenführung handeln kann, weist hierbei einen Lastbereich 210, einen ersten Umlenkbereich 220-1 und einen zweiten Umlenkbereich 220-2 auf, die jeweils den Lastbereich 210 mit einem Rücklaufbereich 230 verbinden, um ein Umlaufen der Wälzkörper 110 in dem sich so bildenden, geschlossenen Kreislauf zu ermöglichen. Zur Vereinfachung der Darstellung sind ebenfalls nicht alle Wälzkörper 110, sondern lediglich 11 beispielhaft ausgewählte Wälzkörper 110 in Fig. 2 gezeigt.

Der Lastbereich 210 weist eine Laufbahn 240 auf, die Teil eines Bauteils 250 ist, das beispielsweise auch den Rücklaufbereich 230 sowie die beiden Umlenkbereiche 220 umfassen kann. Das Bauteil 250 kann beispielsweise ein Profilschienenwagen oder ein anderer Führungswagen sein. Der Lastbereich 210 weist wenigstens einen Abschnitt einer Gegenlaufbahn 260 auf, die Teil eines oder mehrerer entsprechender Gegenbauteile 270 ist. Im Falle eines Profilschienenwagens als Bauteil 250 kann es sich bei dem Gegenbauteil 270 beispielsweise um die zugehörige Profilschiene handeln. Somit zeigt Fig. 2 schematisch eine vereinfachte Darstellung eines Linearsystems bzw. eines Profilschienensystems, bei dem lediglich zur Vereinfachung der Darstellung und aus Klarheitsgründen der Käfig bzw. die Kugelkette 100 gemäß einem Ausführungsbeispiel nicht dargestellt ist.

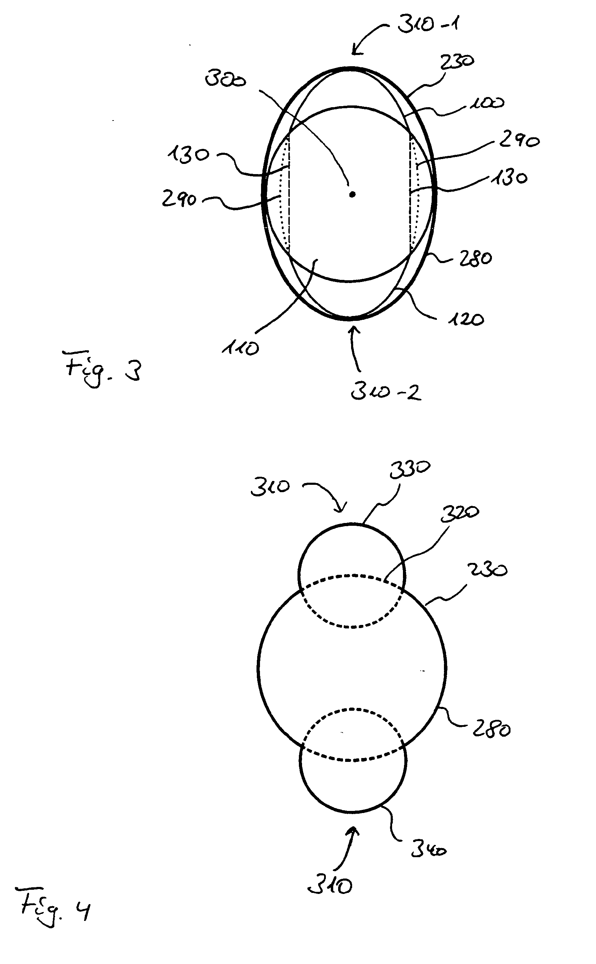

Je nach konkreter Implementierung des Käfigs 100 kann dieser eine Querschnittsform aufweisen, die oval ist oder eine andere, von einer Kreisform abweichende Querschnittsform senkrecht zu der Erstreckungslinie aufweist. Handelt es sich bei dem Käfig 100 gemäß einem Ausführungsbeispiel um einen solchen, bei dem die entsprechende Querschnittsform nicht aufgrund konstruktiver oder herstellungsbedingter Faktoren eingehalten wird, kann beispielsweise der Käfig derart ausgebildet sein, dass der Hohlkörper 120 sich hinsichtlich seiner Form dem Lastbereich 210, dem Umlenkbereich 220 oder dem Rücklaufbereich 230 des Linearwälzlagers 200 anpasst. Anders ausgedrückt kann der entsprechende Körper 120 entsprechend ausgebildet sein, sodass der Hohlkörper 120 an eine Form des Lastbereichs 210, des Umlenkbereichs 220, des Rücklaufbereichs 230 des Linearwälzlagers 200 anpassbar ist. In einem solchen Fall kann es ratsam sein, die Form des Käfigs 100 durch konstruktive Ausgestaltung der entsprechenden Bereiche des Linearwälzlagers konstruktiv zu unterstützen. Fig. 3 zeigt eine erste Möglichkeit, wie ein schlauchförmiger Käfig für einen Profilschienenwagen oder ein anderes Linearwälzlager entsprechend unterstützt werden kann.

Fig. 3 zeigt einen Querschnitt durch einen Rücklaufbereich 230 eines Linearwälzlagers. Der Rücklaufbereich 230 ist hierbei ein Rücklaufkanal mit einem ovalen Querschnitt 280 ausgestaltet, der beispielsweise durch ein Fräsen in einem metallischen Bauteil herstellbar ist. In seinem Inneren ist ein Käfig 100 mit einem schlauchförmigen Hohlkörper 120 dargestellt, in dessen Inneren ein kugelförmiger Wälzkörper 110 angeordnet ist. Durch eine gestrichelte Linie ist eine Öffnung 130 in Fig. 3 angedeutet, die der Wälzkörper 110 teilweise durchdringt. Eine Abweichung der Querschnittsform des Hohlkörpers 120 in dem Bereich der Öffnung 130 ist durch eine punktierte Linie 290 zu beiden Seiten einer Erstreckungslinie 300 des Hohlkörpers 120 dargestellt. Die Erstreckungslinie 300 verläuft hierbei senkrecht zu der in Fig. 3 dargestellten Ebene.

Bei dem in Fig. 3 dargestellten Ausführungsbeispiel wird die Form des Käfigs 100 bzw. die Form des Hohlkörpers 120 in dem Rücklaufbereich 230 durch die Form des Rücklaufkanals 280 unterstützt. So berührt gerade der Hohlkörper 120 in einem ersten Polbereich 310-1 und in einem zweiten Polbereich 310-2 den Rücklaufkanal 280, während die Größe der Öffnungen 130 des Hohlkörpers 120 eine gewisse Streckung des Hohlkörpers 120 in Richtung der Polbereiche 310 unterstützt. Der Wälzkörper 110 berührt hierbei zumindest nicht gleichzeitig die Wände des Rücklaufkanals 280.

Anders ausgedrückt ist bei dem in Fig. 3 gezeigten Rücklaufkanal 280 gegenüber einer minimalen Querschnittsfläche, die gerade ein Passieren des Wälzkörpers 110 ermöglicht, in den beiden Polbereichen 310 zusätzlich Material entfernt worden, um die ovale Querschnittsform des Käfigs 100 zu unterstützen.

Fig. 4 zeigt eine weitere Querschnittsdarstellung durch einen weiteren Rücklaufbereich 230 mit einem weiteren Rücklaufkanal 280, der sich von dem in Fig. 3 gezeigten Rücklaufkanal dadurch unterscheidet, dass dieser nicht durch eine gefräste Form, sondern mithilfe dreier Bohrungen ausgeführt wurde. So weist der Rücklaufkanal 280 eine erste Bohrung 320 auf, die sich hinsichtlich ihres Durchmessers an der Form des Wälzkörpers 110 orientiert, der in Fig. 4 nicht gezeigte ist. Um das zusätzliche Material des Käfigs 100 aufgrund seiner von der Kreisform abweichenden Form aufzunehmen, weist der Rücklaufkanal 280 ferner eine zweite Bohrung 330 und eine dritte Bohrung 340 auf, die zusätzlich in den Polbereichen 310 des Rücklaufkanals 280 eingebracht sind. Bei dem in Fig. 4 dargestellten Ausführungsbeispiel weisen die zweite und die dritte Bohrung 330, 340 identische Bohrungsradien auf, die kleiner sind als der der ersten Bohrung 320. Selbstverständlich kann bei Ausführungsbeispielen sowohl die Anordnung der Bohrungen als auch ihre Radienwahl unterschiedlich ausfallen.

Auch bei dieser Form des Rücklaufkanals 280 wird also durch die beiden zusätzlichen Bohrungen 330, 340 die von der Kreisform abweichende Form des Hohlkörpers 120 (nicht gezeigte in Fig. 4) unterstützt.

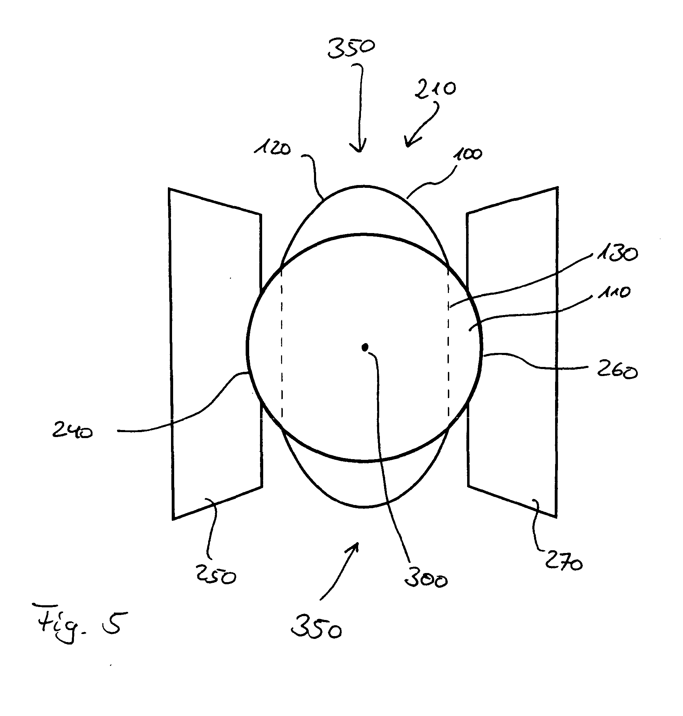

Fig. 5 zeigt schließlich eine vereinfachte Querschnittsdarstellung durch einen Lastbereich 210 eines Linearwälzlagers 200, indem ein Käfig 100 mit einem Hohlkörper 120 angeordnet ist, wobei der Hohlkörper 120 eine ovale Querschnittsform in der in Fig. 5 dargestellten Ebene senkrecht zu der Erstreckungslinie 300 aufweist. In dem Inneren des Käfigs 100 ist ein Wälzkörper 110 angeordnet, bei dem es sich wiederum um einen kugelförmigen Wälzkörper handelt. Der Hohlkörper 120 weist wiederum eine durch eine gestrichelte Linie dargestellte Öffnung 130 auf, die derart ausgebildet ist, dass der Wälzkörper 110 nur teilweise die Öffnung 130 durchdringen kann.

In dem Lastbereich stehen die Wälzkörper 110 seitens des Bauteils 250, bei dem es sich beispielsweise um einen Profilschienenwagen handeln kann, mit einer Laufbahn 240 in Berührung und wälzen sich im Falle einer linearen Bewegung an dieser ab. Entsprechend stehen die Wälzkörper bezüglich des Gegenbauteils 270 ebenfalls mit einer Gegenlaufbahn 260 in Berührung.

Bei der in Fig. 5 dargestellten Situation ist zwischen dem Bauteil 250 und dem Gegenbauteil 270 jeweils ein Bereich zugänglich, in den sich der Käfig 100 bzw. der Hohlkörper 120 erstrecken kann, sodass seine von der Kreisform abweichende Querschnittsform auch in dem Lastbereich gewahrt werden kann. Bei der hier gezeigten Situation handelt es sich um die beiden Bereiche 350, die sich als Ausnehmungen zwischen dem Bauteil 250 und dem gegen Bauteil 270 bilden. Somit weist auch der Lastbereich 210 aufgrund seiner konstruktiven Ausgestaltung eine Querschnittsform senkrecht zu der Erstreckungslinie 300 auf, die es dem Käfig 100 ermöglicht, seine von der Kreisform abweichende Querschnittsform (z.B. Ovalform) im Lastbereich 210 zu behalten.

Fig. 6 zeigt eine weitere Möglichkeit, mithilfe einer oder mehrerer formunterstützender Strukturen eine Querschnittsform eines Hohlkörpers 120 zu beeinflussen.

So zeigt Fig. 6 eine seitliche Darstellung eines Teils eines Käfigs 100 gemäß einem Ausführungsbeispiel mit einem Hohlkörper 120. In dem Inneren des Hohlkörpers 120 sind mehrere Wälzkörper 110-1 bis 110-4 angeordnet. Der Hohlkörper 120 weist hierbei entsprechend ovale Öffnungen 130-1 bis 130-4 auf, die derart ausgebildet sind, dass die kugelförmigen Wälzkörper 110 diese nur teilweise durchdringen können.

Die Öffnungen 130 sind hierbei entlang der Erstreckungslinie 300 in unterschiedlichen Abständen angeordnet. So weisen bei dem in Fig. 6 dargestellten Ausführungsbeispiel eines Käfigs 100 die beiden Öffnungen 130-1 und 130-2 sowie die zugehörigen Wälzkörper 110-1 und 110-2 einen ersten Abstand 150-1 auf, den auch die beiden Öffnungen 130-3 und 130-4 und die zugehörigen Wälzkörper 110-3 und 110-4 aufweisen. Dieser erste Abstand ist kleiner als ein zweiter Abstand 150-2, der zwischen den Öffnungen 130-2 und 130-3 bzw. den entsprechenden Wälzkörpern 110-2 und 110-3 liegt. Dies liegt daran, dass zwischen diesen beiden letztgenannten Öffnungen 130-2 und 130-3 eine formunterstützende Struktur in Form einer länglichen Schweißstelle 360 angeordnet ist. An dieser Schweißstelle 360 sind die beiden Außenkanten des Hohlkörpers 120 miteinander verschweißt, sodass der Hohlkörper 120 durch die Schweißstelle 360 bzw. durch die formunterstützende Struktur bereits eine von der Kreisform abweichende Querschnittsfläche senkrecht zu der Erstreckungslinie 300 aufweist.

Neben der in Fig. 6 gezeigten länglichen Schweißstelle 360 können auch punktförmige Schweißstellen, Vernietungen, Verschraubungen oder andere formunterstützende Strukturen zum Einsatz kommen, die die Oberflächen des Hohlkörpers 120 an gegenüberliegenden Seiten miteinander verbinden. Alternativ oder ergänzend können auch andere formunterstützende Strukturen verwendet werden, die beispielsweise eine ovale Form des Hohlkörpers zumindest abschnittsweise unterstützen oder erzwingen. So können beispielsweise in einem entsprechenden Hohlkörper Strukturen eingebracht werden, um die einer von der Kreisform abweichende Querschnittsform zu unterstützen. Hierbei kann es sich beispielsweise um einen Bereich mit zusätzlichem Material ebenso handeln, wie beispielsweise auch um einen in einen Kunststoffschlauch einvulkanisierte gebogene Metallstruktur.

Optional kann darüber hinaus ebenfalls im Randbereich der Öffnungen 130 eine Verstärkung vorgesehen werden, die ebenfalls als formunterstützende Struktur aber auch als Verstärkung der Kanten der Öffnungen 130 zum Halten der Wälzkörper dienen kann. Auch eine entsprechende Verstärkung der Kanten kann mithilfe unterschiedlicher Techniken, also beispielsweise durch einen materialverstärkten Bereich, durch eine einvulkanisierte Metallstruktur oder eine verklebte Kunststoffstruktur implementiert und umgesetzt werden.

Der erste Abstand 150-1 ist hierbei derart ausgelegt, dass sich benachbarte Wälzkörper 110 gerade nicht berühren, sofern diese nicht innerhalb des Hohlkörpers ihre Positionen verlassen. So ist hier der erste Abstand 150-1 größer als der Durchmesser der kugelförmigen Wälzkörper 110, für die der Käfig 100 ausgebildet ist.

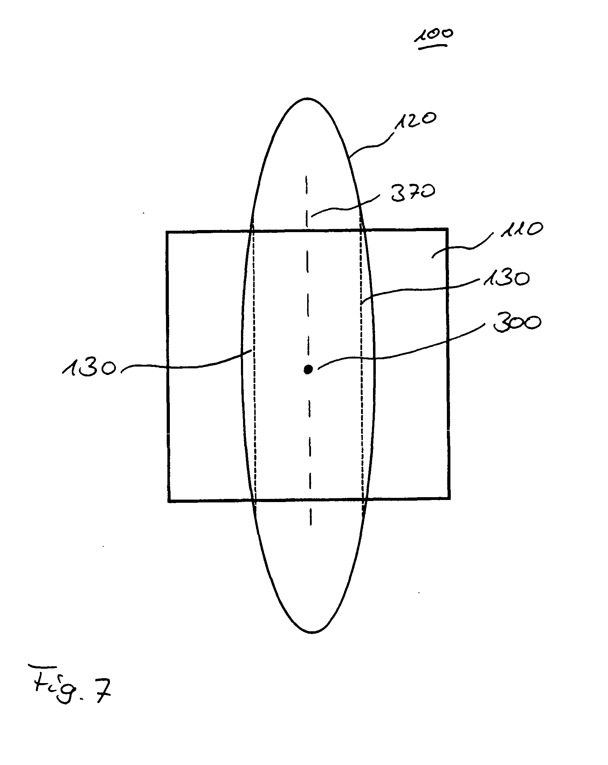

Fig. 7 zeigt schließlich eine Querschnittsdarstellung eines Käfigs 100 mit einem ovalförmigen Hohlkörper 120, der wiederum an gegenüberliegenden Seiten paarweise Öffnungen 130 aufweist. Die Öffnungen 130 sind erneut senkrecht zu der Erstreckungslinie 300 angeordnet, die auf der in Fig. 7 gezeigten Zeichenebene senkrecht steht.

Im Unterschied zu den bisher gezeigten Ausführungsbeispielen sind jedoch die Wälzkörper 110 im vorliegenden Fall nicht mehr kugelförmig, sondern zylinderförmig. Im vorliegenden Fall sind die Öffnungen 130 derart ausgebildet, dass die Wälzkörper 110 nunmehr die Öffnungen 130 vollständig durchdringen können, ohne dass auf die Wälzkörper eine entsprechende Kraft ausgeübt wird, die ihrerseits zu einer Verformung des Hohlkörpers 120 führt.

Der zylinderförmige Wälzkörper 110, wie er in Fig. 7 dargestellt ist, weist eine Rotationsachse 370 auf, um die sich der Wälzkörper 110 während eines Betriebs dreht. Senkrecht zu dieser Rotationsachse 370 weist dieser somit eine kreisförmige Querschnittsfläche auf.

Selbstverständlich sind Ausführungsbeispiele von Käfigen 100 und Linearwälzlagern 200 nicht auf kugelförmige oder zylinderförmige Wälzkörper 110 beschränkt. So können beispielsweise auch nadelförmige oder tonnenförmige Wälzkörper 110 zum Einsatz kommen. Ebenso kann optional in das Innere des Hohlkörpers 120 ein Schmiermittel eingebracht werden. Anders ausgedrückt kann ein solcher Schlauchkäfig 100 im Inneren mit Schmiermittel gefüllt sein. Je nach verwendetem Schmiermittel kann es hierbei ratsam sein, in seinem Inneren ein poröses Material, beispielsweise einen Schwamm, vorzusehen, der ausgebildet ist, um den entsprechenden Schmierstoff aufzunehmen. Dies kann insbesondere bei Schmierstoffen mit einer niedrigen Viskosität, also Schmierstoffen die leicht fließen, ratsam sein. Beispiele hierfür können niederviskose Öle darstellen.

Im Unterschied hierzu kann gerade bei eher zähflüssigen Schmierstoffen gegebenenfalls eine Implementierung eines Schwamms oder eines anderen porösen Materials im Inneren des Hohlkörpers 120 entfallen. Hier sind beispielsweise Fette oder andere hochviskose Schmierstoffe zu nennen, wobei bei der Einordnung der Viskosität auch die jeweils herrschenden Betriebstemperaturen berücksichtigt werden können. Somit kann bei Ausführungsbeispielen gegebenenfalls eine Schmiermittelversorgung bereits im Rahmen des Käfigs implementiert werden, sodass eine entsprechende Schmiermittelversorgung durch gezielte Komponenten des Linearwälzlagers gegebenenfalls einsparbar ist.

Ein Ausführungsbeispiel eines Verfahrens zum Bereitstellen eines Käfigs 100 zur Aufnahme von Wälzkörpern 110 für Linearwälzlager 200 umfasst zunächst ein Bereitstellen eines flexiblen, schlauchförmigen Hohlkörpers 120 zur Aufnahme der Wälzkörper 120 in seinem Inneren. Der Hohlkörper 120 erstreckt sich entlang einer zentral in dem Inneren verlaufenden Erstreckungslinie 300. Anschließend kann eine Mehrzahl paarweise senkrecht zu der Erstreckungslinie angeordneter Öffnungen 130 in einer Oberfläche des Hohlkörpers 120 erzeugt werden, wobei die Öffnungen derart ausgeformt sind, dass die Wälzkörper die Öffnungen wenigstens teilweise durchdringen können.

Das Bereitstellen eines entsprechenden Hohlkörpers ist häufig mithilfe einfacher technischer Verfahren möglich und daher kostengünstig möglich. Da auch das Erzeugen der Mehrzahl paarweise angeordneter Öffnungen 130 typischerweise ohne größere technische Schwierigkeiten möglich ist, ermöglichen Ausführungsbeispiele somit im Allgemeinen eine kostengünstige Herstellung eines Käfigs 100. Häufig ist es daher möglich, Käfige gemäß Ausführungsbeispielen mit einem geringen Aufwand an Spezialwerkzeugen oder Werkzeugstrukturen herzustellen. So kann gegebenenfalls sogar die Herstellung entsprechender Gießformen oder Spritzformen entfallen, wenn ein entsprechender Hohlkörper als Schlauchmaterial zu kaufen ist.

Bei Ausführungsbeispielen eines Verfahrens zum Bereitstellen eines Käfigs kann gegebenenfalls vor dem Erzeugen der Mehrzahl von paarweise angeordneten Öffnungen 130 oder auch danach ein poröses Material, beispielsweise ein Schwamm, zur Aufnahme eines Schmierstoffs in den Hohlkörper eingebracht werden. Wird das poröse Material vor dem Erzeugen der Öffnungen 130 in den Hohlkörper eingebracht, kann gegebenenfalls überschlüssiges Material des porösen Materials zusammen mit dem überschüssigen Material des Hohlkörpers beim Erzeugen der Öffnungen aus dem Käfig entfernt werden. Ein entsprechendes poröses Material kann beispielsweise in das Innere des Hohlkörpers mithilfe eines physikalischen oder eines chemischen Aufschäumverfahrens eingebracht werden.

Optional kann ferner das Verfahren zum Bereitstellen eines Käfigs ein Bestücken wenigstens eines Teils der Öffnungen mit entsprechenden Wälzkörpern umfassen. Ebenso kann optional das Verfahren zum Bereitstellen eines Käfigs gemäß einem Ausführungsbeispiel ein Einbringen bzw. ein Befüllen des Inneren des Hohlkörpers 120 mit einem Schmiermittel umfassen. Hierbei kann es sich um ein Öl, ein Fett oder auch ein anderes Schmiermittel oder einen anderen Schmierstoff handeln.

### Bezugszeichenliste

- 100: Käfig
- 110: Wälzkörper
- 120: Hohlkörper
- 130: Öffnung
- 140: gekrümmter Bereich
- 150: Abstand
- 160: Ende
- 200: Linearwälzlager
- 210: Lastbereich
- 220: Umlenkbereich
- 230: Rücklaufbereich
- 240: Laufbahn
- 250: Bauteil
- 260: Gegenlaufbahn
- 270: Gegenbauteil
- 280: Rücklaufkanal
- 290: punktierte Linie
- 300: Erstreckungslinie
- 310: Polbereich
- 320: erste Bohrung
- 330: zweite Bohrung
- 340: dritte Bohrung
- 350: Bereich
- 360: Schweißstelle
- 370: Rotationsachse

## Patentansprüche

1. Käfig (100) zur Aufnahme von Wälzkörpern (100) für ein Linearwälzlager (200) mit einem Lastbereich (210) und einem Rücklaufbereich (230), mit folgenden Merkmalen:
einem flexiblen, schlauchförmigen Hohlkörper (120) zur Aufnahme der Wälzkörper (110) in seinem Inneren, wobei sich der Hohlkörper (120) entlang einer zentral in dem Inneren verlaufenden Erstreckungslinie (300) erstreckt;
wobei der Hohlkörper (120) eine Mehrzahl paarweise senkrecht zu der Erstreckungslinie (300) angeordneter Öffnungen (130) in einer Oberfläche des Hohlkörpers (120) aufweist;
wobei die Öffnungen (130) derart ausgeformt sind, dass die Wälzkörper (110) die Öffnungen (130) wenigstens teilweise durchdringen können;
wobei die Mehrzahl von Öffnungen (130) entlang der Erstreckungslinie (300) derart angeordnet sind, dass Wälzkörper (110) in dem Inneren des Hohlkörpers (120) auf Abstand gehalten werden; und
wobei der Hohlkörper (120) eine ovale Querschnittsform in dem Lastbereich (210) oder dem Rücklaufbereich (230) senkrecht zu der Erstreckungslinie (300) aufweist.

2. Käfig (100) nach Anspruch 1, bei dem der Hohlkörper (120) dünnwandig mit einer Wandstärke zwischen 10 µm und 5 mm ausgeführt ist.

3. Käfig (100) nach einem der vorhergehenden Ansprüche, bei dem der Hohlkörper (120) einen biegsamen Kunststoff, Naturkautschuk, einen synthetischen Kautschuk, Polyvinylchlorid, Polyurethan, Polyamid, Polyethylen oder ein Silikon aufweist.

4. Käfig (100) nach einem der vorhergehenden Ansprüche, bei dem der Käfig (100) ausgebildet ist, um mehrfach mit einem Biegeradius biegbar zu sein, wobei ein Verhältnis von Biegeradius zu einer Umfangslänge des Käfigs in einer Ebene senkrecht zu der Erstreckungslinie (300) einen Wert 10 aufweist.

5. Käfig (100) nach einem der vorhergehenden Ansprüche, bei dem der Käfig (100) ferner in seinem Inneren ein poröses Material, beispielsweise ein schwammförmiges Material, aufweist, das ausgebildet ist, ein Schmiermittel aufzunehmen.

6. Käfig (100) nach einem der vorhergehenden Ansprüche, bei dem der Hohlkörper (120) ein Material aufweist, sodass der Hohlkörper (120) biegsam und formstabil ist, um die ovale Querschnittsform in dem Lastbereich (210) oder dem Rücklaufbereich (230) senkrecht zu der Erstreckungslinie (300) aufzuweisen.

7. Käfig (100) nach einem der vorhergehenden Ansprüche, bei dem der Hohlkörper (120) wenigstens eine formunterstützende Struktur aufweist, um die ovale Querschnittsform in dem Lastbereich (210) oder dem Rücklaufbereich (230) senkrecht zu der Erstreckungslinie (300) aufzuweisen.

8. Käfig (100) nach Anspruch 7, bei dem die wenigstens eine formunterstützende Struktur eine längliche Schweißstelle (360), eine punktförmige Schweißstelle, eine Vernietung, ein Verschraubung, einen Bereich mit zusätzlichem Material, eine einvulkanisierte gebogene Metallstruktur und/oder eine Verstärkung in einem Randbereich der Öffnungen (130) aufweist.

9. Käfig (100) nach einem der vorhergehenden Ansprüche, bei dem die Öffnungen (130) derart oval ausgebildet sind, dass kugelförmige Wälzkörper (110) diese nur teilweise durchdringen können.

10. Linearwälzlager (200) mit folgenden Merkmalen:
einem Lastbereich (210), einem Rücklaufbereich (230) und einem zwischen dem Rücklaufbereich (230) und dem Lastbereich (210) angeordneten Umlenkbereich (220), wobei der Lastbereich (210) eine Laufbahn (240) umfasst;
einem Käfig (100) nach einem der Ansprüche 1 bis 9;
einer Mehrzahl von Wälzkörpern (110), die in dem Inneren des Käfigs (100) angeordnet sind,
wobei der Käfig (100) mit der Mehrzahl von Wälzkörpern (110) in dem Lastbereich (210), dem Rücklaufbereich (230) und dem Umlenkbereich (220) angeordnet ist; und
wobei die Wälzkörper (110) mit der Laufbahn (240) und wenigstens einem Abschnitt einer Gegenlaufbahn (260) eines Gegenbauteils (270) in Berührung bringbar sind, und eine lineare Bewegung des Linearwälzlagers (200) zu dem Gegenbauteil (270) ermöglichen.

11. Linearwälzlager (200) nach Anspruch 10, bei dem der Käfig (100) ferner ein Schmiermittel zur Schmierung des Linearwälzlagers umfasst.

12. Linearwälzlager (200) nach einem der Ansprüche 10 oder 11, bei dem der Rücklaufbereich (230) eine von einer Kreisform abweichende Querschnittsform aufweist, wobei die Querschnittsform senkrecht zu der Erstreckungslinie (300) liegt.

13. Verfahren zum Bereitstellen eines Käfigs (100) zur Aufnahme von Wälzkörpern (110) für ein Linearwälzlager (200) mit einem Lastbereich (210) und einem Rücklaufbereich (230), umfassend:
Bereitstellen eines flexiblen, schlauchförmigen Hohlkörper (120) zur Aufnahme der Wälzkörper (110) in seinem Inneren, wobei sich der Hohlkörper (120) entlang einer zentral in dem Inneren verlaufenden Erstreckungslinie (300) erstreckt; und
Erzeugen einer Mehrzahl paarweise senkrecht zu der Erstreckungslinie (300) angeordneter Öffnungen (130) in einer Oberfläche des Hohlkörpers (120), wobei die Öffnungen (130) derart ausgeformt sind, dass die Wälzkörper (110) die Öffnungen (130) wenigstens teilweise durchdringen können; die Mehrzahl von Öffnungen (130) entlang der Erstreckungslinie (300) derart angeordnet sind, dass Wälzkörper (110) in dem Inneren des Hohlkörpers (120) auf Abstand gehalten werden, und
wobei der Hohlkörper (120) durch das Bereitstellen und das Erzeugen der Öffnungen (130) eine ovale Querschnittsform in dem Lastbereich (210) oder dem Rücklaufbereich (230) senkrecht zu der Erstreckungslinie (300) aufweist.

## Claims

1. Cage (100) for receiving rolling bodies (100) for a linear anti-friction bearing (200) having a load-bearing region (210) and a return region (230), having the following features:
a flexible, tubular hollow body (120) for receiving the rolling bodies (110) in its interior, the hollow body (120) extending along a line of extent (300) which runs centrally in the interior;
the hollow body (120) having a plurality of openings (130) in a surface of the hollow body (120) which are arranged in pairs perpendicularly with respect to the line of extent (300);
the openings (130) being shaped in such a way that the rolling bodies (110) can penetrate the openings (130) at least partially;
the plurality of openings (130) being arranged along the line of extent (300) in such a way that rolling bodies (110) are kept at a spacing in the interior of the hollow body (120); and
the hollow body (120) having an oval cross-sectional shape in the load-bearing region (210) or the return region (230) perpendicularly with respect to the line of extent (300).

2. Cage (100) according to Claim 1, in which the hollow body (120) is of thin-walled configuration with a wall thickness of between 10 µm and 5 mm.

3. Cage (100) according to one of the preceding claims, in which the hollow body (120) has a flexible plastic, natural rubber, a synthetic rubber, polyvinyl chloride, polyurethane, polyamide, polyethylene or a silicone.

4. Cage (100) according to one of the preceding claims, in which the cage (100) is configured so as to be capable of being bent multiple times with a bending radius, a ratio of bending radius to a circumferential length of the cage in a plane perpendicularly with respect to the line of extent (300) having a value of 10.

5. Cage (100) according to one of the preceding claims, in which, furthermore, the cage (100) has a porous material, for example a sponge-like material, which is configured to absorb a lubricant.

6. Cage (100) according to one of the preceding claims, in which the hollow body (120) has a material, with the result that the hollow body (120) is flexible and dimensionally stable, in order to exhibit the oval cross-sectional shape in the load-bearing region (210) or the return region (230) perpendicularly with respect to the line of extent (300).

7. Cage (100) according to one of the preceding claims, in which the hollow body (120) has at least one shape-supporting structure, in order to exhibit the oval cross-sectional shape in the load-bearing region (210) or the return region (230) perpendicularly with respect to the line of extent (300).

8. Cage (100) according to Claim 7, in which the at least one shape-supporting structure has an elongate welded location (360), a punctiform welded location, a riveted connection, a screwed connection, a region with additional material, a vulcanized curved metal structure and/or a reinforcement in an edge region of the openings (130).

9. Cage (100) according to one of the preceding claims, in which the openings (130) are of oval configuration such that spherical rolling bodies (110) can penetrate them only partially.

10. Linear anti-friction bearing (200) having the following features:
a load-bearing region (210), a return region (230) and a deflection region (220) which is arranged between the return region (230) and the load-bearing region (210), the load-bearing region (210) comprising a raceway (240) ;
a cage (100) according to one of Claims 1 to 9;
a plurality of rolling bodies (110) which are arranged in the interior of the cage (100),
the cage (100) being arranged with the plurality of rolling bodies (110) in the load-bearing region (210), the return region (230) and the deflection region (220); and
it being possible for the rolling bodies (110) to be brought into contact with the raceway (240) and at least one section of a corresponding raceway (260) of a corresponding component (270), and making possible a linear movement of the linear anti-friction bearing (200) with respect to the corresponding component (270).

11. Linear anti-friction bearing (200) according to Claim 10, in which, furthermore, the cage (100) comprises a lubricant for lubricating the linear anti-friction bearing.

12. Linear anti-friction bearing (200) according to either of Claims 10 and 11, in which the return region (230) has a cross-sectional shape which differs from a circular shape, the cross-sectional shape lying perpendicularly with respect to the line of extent (300).

13. Method for providing a cage (100) for receiving rolling bodies (110) for a linear anti-friction bearing (200) with a load-bearing region (210) and a return region (230), comprising:
provision of a flexible, tubular hollow body (120) for receiving the rolling bodies (110) in its interior, the hollow body (120) extending along a line of extent (300) which runs centrally in the interior; and
production of a plurality of openings (130) in a surface of the hollow body (120) which are arranged in pairs perpendicularly with respect to the line of extent (300), the openings (130) being shaped in such a way that the rolling bodies (110) can penetrate the openings (130) at least partially; the plurality of openings (130) being arranged along the line of extent (300) in such a way that rolling bodies (110) are kept at a spacing in the interior of the hollow body (120); and
the hollow body (120) having an oval cross-sectional shape in the load-bearing region (210) or the return region (230) perpendicularly with respect to the line of extent (300) as a result of the provision and the production of the openings (130).

## Revendications

1. Cage (100) destinée à recevoir des éléments roulants (110) pour un palier à roulement linéaire (200) comprenant une région de charge (210) et une région de retour (230), comprenant les caractéristiques suivantes :
un corps creux flexible en forme de tuyau souple (120) pour recevoir les éléments roulants (110) en son intérieur, le corps creux (120) s'étendant le long d'une ligne d'étendue (300) s'étendant centralement à l'intérieur ;
le corps creux (120) présentant une pluralité d'ouvertures (130) disposées par paires perpendiculairement à la ligne d'étendue (300) dans une surface du corps creux (120) ;
les ouvertures (130) étant formées de telle sorte que les éléments roulants (110) puissent traverser au moins en partie les ouvertures (130) ;
la pluralité d'ouvertures (130) étant disposées le long de la ligne d'étendue (300) de telle sorte que des éléments roulants (110) soient retenus à distance les uns des autres à l'intérieur du corps creux (120) ; et
le corps creux (120) présentant une forme en section transversale ovale dans la région de charge (210) ou la région de retour (230) perpendiculairement à la ligne d'étendue (300).

2. Cage (100) selon la revendication 1, dans laquelle le corps creux (120) est réalisé avec une paroi mince ayant une épaisseur de paroi comprise entre 10 µm et 5 mm.

3. Cage (100) selon l'une quelconque des revendications précédentes, dans laquelle le corps creux (120) présente un plastique flexible, du caoutchouc naturel, un caoutchouc synthétique, du chlorure de polyvinyle, du polyuréthane, du polyamide, du polyéthylène ou une silicone.

4. Cage (100) selon l'une quelconque des revendications précédentes, dans laquelle la cage (100) est réalisée de manière à pouvoir être flexible plusieurs fois avec un rayon de courbure, un rapport du rayon de courbure à une longueur périphérique de la cage dans un plan perpendiculaire à la ligne d'étendue (300) présentant une valeur de 10.

5. Cage (100) selon l'une quelconque des revendications précédentes, dans laquelle la cage (100) présente en outre en son intérieur un matériau poreux, par exemple un matériau en forme d'éponge qui est réalisé pour recevoir un lubrifiant.

6. Cage (100) selon l'une quelconque des revendications précédentes, dans laquelle le corps creux (120) présente un matériau de telle sorte que le corps creux (120) soit flexible et de forme stable, pour présenter la forme ovale en section transversale dans la région de charge (210) ou la région de retour (230) perpendiculairement à la ligne d'étendue (300).

7. Cage (100) selon l'une quelconque des revendications précédentes, dans laquelle le corps creux (120) présente au moins une structure de support de forme afin de présenter la forme ovale en section transversale dans la région de charge (210) ou dans la région de retour (230) perpendiculairement à la ligne d'étendue (300).

8. Cage (100) selon la revendication 7, dans laquelle l'au moins une structure de support de forme présente une zone de soudure allongée (360), une zone de soudure ponctuelle, un rivetage, un vissage, une région avec un matériau supplémentaire, une structure métallique cintrée vulcanisée et/ou un renforcement dans une région de bord des ouvertures (130).

9. Cage (100) selon l'une quelconque des revendications précédentes, dans laquelle les ouvertures (130) sont réalisées sous forme ovale de telle sorte que les éléments roulants en forme de billes (110) ne puissent traverser celles-ci que partiellement.

10. Palier à roulement linéaire (200) comprenant les caractéristiques suivantes :
une région de charge (210), une région de retour (230) et une région de renvoi (220) disposée entre la région de retour (230) et la région de charge (210), la région de charge (210) comprenant un chemin de roulement (240) ;
une cage (100) selon l'une quelconque des revendications 1 à 9 ;
une pluralité d'éléments roulants (110) qui sont disposés à l'intérieur de la cage (100),
la cage (100) étant disposée avec la pluralité d'éléments roulants (110) dans la région de charge (210), la région de retour (230) et la région de renvoi (220) ; et
les éléments roulants (110) pouvant être amenés en contact avec le chemin de roulement (240) et au moins une portion d'un chemin de roulement conjugué (260) d'un composant conjugué (270), et permettant un mouvement linéaire du palier à roulement linéaire (200) par rapport au composant conjugué (270).

11. Palier à roulement linéaire (200) selon la revendication 10, dans lequel la cage (100) comprend en outre un lubrifiant pour lubrifier le palier à roulement linéaire.

12. Palier à roulement linéaire (200) selon l'une quelconque des revendications 10 ou 11, dans lequel la région de retour (230) présente une forme en section transversale s'écartant d'une forme circulaire, la forme en section transversale étant perpendiculaire à la ligne d'étendue (300).

13. Procédé pour fournir une cage (100) pour recevoir des éléments roulants (110) pour un palier à roulement linéaire (200) comprenant une région de charge (210) et une région de retour (230), comprenant :
La fourniture d'un corps creux flexible en forme de tuyau souple (120) pour recevoir les éléments roulants (110) en son intérieur, le corps creux (120) s'étendant le long d'une ligne d'étendue (300) s'étendant centralement à l'intérieur ; et
la production d'une pluralité d'ouvertures (130) disposées par paires perpendiculairement à la ligne d'étendue (300) dans une surface du corps creux (120), les ouvertures (130) étant formées de telle sorte que les éléments roulants (110) puissent traverser au moins en partie les ouvertures (130) ; la pluralité d'ouvertures (130) étant disposées le long de la ligne d'étendue (300) de telle sorte que des éléments roulants (110) soient retenus à distance les uns des autres à l'intérieur du corps creux (120), et
le corps creux (120), par la fourniture et la production des ouvertures (130), présentant une forme en section transversale ovale dans la région de charge (210) ou dans la région de retour (230) perpendiculairement à la ligne d'étendue (300).
